# EUROPÄISCHE PATENTSCHRIFT

(11) **EP 4 326 619 B1**
(45) Veröffentlichungstag und Bekanntmachung des Hinweises auf die Patenterteilung: **24.09.2025**
(21) Anmeldenummer: 22725802.7
(22) Anmeldetag: 26.04.2022
(51) Int. Cl.: B64D 27/24

(54) **FLUGGERÄT MIT EINEM BATTERIEBLOCK**
AIRCRAFT HAVING A BATTERY BLOCK
AÉRONEF COMPRENANT UN BLOC-BATTERIE

(30) Priorität: 26.04.2021 DE 102021110636
(43) Veröffentlichungstag der Anmeldung: 28.02.2024
(73) Patentinhaber: Wingcopter GmbH, 64331 Weiterstadt (DE)
(72) Erfinder: HESSELBARTH, Jonathan, 64283 Darmstadt (DE)
(74) Vertreter: Habermann Intellectual Property Partnerschaft von Patentanwälten mbB
(86) Internationale Anmeldenummer: PCT/EP2022/061070
(87) Internationale Veröffentlichungsnummer: WO 2022/229196

(56) Entgegenhaltungen:
- CN-A- 109 094 807
- CN-U- 207 496 936
- KR-A- 20190 055 925

## Beschreibung

Die Erfindung betrifft ein Fluggerät mit einem Batterieblock zur Energieversorgung des Fluggeräts, wobei der Batterieblock innerhalb eines Batteriefachs des Fluggeräts anordnenbar ist, wobei das Batteriefach innerhalb eines durch einen Rumpf des Fluggeräts gebildeten Volumens angeordnet ist und von außen durch eine Aufnahmeöffnung des Rumpfes zugänglich ist, sodass der Batterieblock durch die Aufnahmeöffnung hindurch in das Batteriefach einbringbar ist, wobei die Aufnahmeöffnung bei bestimmungsgemäßer Verwendung des Fluggeräts auf einer nach oben weisenden Oberseite des Rumpfes angeordnet ist, sodass der Batterieblock durch eine Verlagerung des Batterieblocks entlang einer im Wesentlichen parallel zu einer Schwerkraftrichtung orientierten Einschubachse in das Batteriefach einführbar ist, wobei der Batterieblock eine Griffvorrichtung aufweist, die bei einem bestimmungsgemäß in das Batteriefach eingeführten Batterieblock von außerhalb des Fluggeräts erreichbar ist.

Als Fluggeräte zum Transport von Stückgut sind senkrecht startende Fluggeräte, beispielsweise sogenannte Quadrocopter bekannt. Ein Quadrocopter ist ein Fluggerät, bei dem vier in einer Ebene angeordnete und senkrecht nach unten wirkende Rotoren oder Propeller benutzt werden, um Auftrieb zu erzeugen. Der Vortrieb des Quadrocopters wird durch eine Neigung der Rotorebene erzeugt. Diese Fluggeräte können je nach Antriebsleistung eine gewisse Nutzlast über eine bestimmte Strecke transportieren. Dabei ist die Reichweite je nach Antriebsleistung und Nutzlast durch die zur Verfügung stehende Akkukapazität begrenzt.

In der Regel wird die Energieversorgung des Fluggeräts über austauschbare Batterieblöcke realisiert, die in einem erschöpften Zustand durch neue aufgeladene Batterieblocks ersetzt werden, um somit eine schnelle Fortführung des Flugbetriebs zu ermöglichen, ohne dass eine langwierige Ladedauer durch fest eingebaute Batterieblöcke notwendig ist. Die Batterieblocks werden in der Regel seitlich in ein Batteriefach eingeschoben, welches durch eine Klappe verschließbar ist, um den Akkumulator vor einem herausfallen während des Flugbetriebs oder gegenüber Umwelteinflüssen zu schützen. Nach dem Einschieben des Batterieblocks in das Batteriefachs wird eine an dem Batterieblock angebrachte elektrische Verbindungsleitung mit dem Fluggerät verbunden, um die elektrische Verbindung herzustellen.

Ein seitliches Einschieben des Batterieblocks in das Batteriefach kann umständlich und zeitaufwändig sein. Insbesondere die Handhabung des Batterieblocks während des seitlichen Einschiebens des Batterieblocks in das Batteriefach erfordert eine große Sorgfalt und Erfahrung, da der Batterieblock in der Regel ein großes Gewicht aufweist. Da das Fluggerät meist in Leichtbauweise ausgestaltet ist, kann in einem nicht vollständig eingeschobenen Batterieblocks der Schwerpunkt des Fluggeräts so verändert sein, dass das Fluggerät mitsamt dem Batterieblock zur Seite kippt. Außerdem erfordert die elektrische Verbindung des Batterieblocks mit dem Fluggerät und das anschließende Verschließen der Klappe einen zusätzlichen Zeitaufwand. Ebenso führt die umständliche Handhabung des Batterieblocks bei der Entnahme des Batterieblocks aus dem Batteriefach beziehungsweise bei dem Trennen der elektrischen Verbindung zwischen dem Batterieblock dem Fluggerät zu einem zusätzlichen zeitlichen Aufwand bei dem Austausch des Batterieblocks.

Weitere bekannte Fluggeräte sehen die Installation der Batterieblöcke auf einer Unterseite des Fluggeräts vor. Eine derartige Aufnahme des Batterieblocks erfordert unter Umständen eine zeitaufwändige Demontage der auf der Unterseite des Fluggeräts angebrachten Anbauteile, wie Seilwinden, Transportbehälter oder Befestigungsvorrichtungen. Des Weiteren ist für eine gute Zugänglichkeit der Unterseite des Fluggeräts das Fluggerät auf den Kopf zu stellen, was je nach Größe und Aufbau des Fluggeräts mit einem großen Kraft- und Zeitaufwand verbunden ist. Ein Austausch eines auf der Unterseite des Fluggeräts angebrachten Batterieblocks ist somit ebenfalls sehr umständlich und zeitaufwändig.

In der Druckschrift CN 207 496 936 U wird eine Lieferdrone mit zwei in von einer Oberseite der Lieferdrohne aus zugänglichen Batteriefächern anordnenbaren Batterien beschrieben.

Als Aufgabe der vorliegenden Erfindung wird es angesehen, die aus dem Stand der Technik bekannten Fluggeräte mit einem Batterieblock weiterzuentwickeln.

Diese Aufgabe wird erfindungsgemäß dadurch gelöst, dass der Batterieblock eine Batterieblockabdeckung aufweist, wobei eine Außenkontur der Batterieblockabdeckung an eine Rumpfform einer die Aufnahmeöffnung umgebenden Rumpfoberfläche des Fluggeräts angepasst ist und in einem montierten Zustand des Batterieblocks mit der Rumpfoberfläche des Rumpfes bündig abschließt, wobei die Batterieblockabdeckung im Bereich der Außenkontur ein Dichtmittel aufweist, wobei das Dichtmittel in dem montierten Zustand des Batterieblocks im Bereich der Rumpfoberfläche an dem Rumpf anliegt und das Batteriefach flüssigkeitsdicht verschließt. Somit ist der Batterieblock und das durch den Rumpf des Fluggeräts gebildete Volumen gegenüber äußeren Umwelteinflüssen, wie Regen oder Staub geschützt, da ein Eindringen von Flüssigkeit, wie beispielsweise Regenwasser in das Batteriefach verhindert werden kann. Durch die Batterieblockabdeckung wird bei einer Horizontalfluglage zudem ein besonders geringer Luftwiderstand durch das Fluggerät erzeugt.

Die Batterieblockabdeckung ist erfindungsgemäß unmittelbar auf einer Stirnseite des Batterieblocks angeordnet. Somit lässt sich das innerhalb des Batteriefachs durch den Batterieblock eingenommene Volumen besonders gut ausnutzen und ein besonders großer Batterieblock nutzen. Vorteilhafterweise ist erfindungsgemäß optional vorgesehen, dass die Batterieblockabdeckung beabstandet zu der Stirnseite des Batterieblocks angeordnet ist. Dazu kann die Batterieblockabdeckung beispielsweise als dünnwandig ausgestaltetes und an die Rumpfform angepasstes Bauteil ausgestaltet sein, das über Abstandshalterelemente beziehungsweise Befestigungselemente an dem Batterieblock angeordnet ist. Dabei kann die Batterieblockabdeckung aus einem Material hergestellt sein, welches dem Material des Rumpfes entspricht. Üblicherweise ist der Rumpf eines Fluggeräts aus einem Faserverbundkunststoff hergestellt, der eine hohe Steifigkeit und Festigkeit bei gleichzeitig geringem Gewicht aufweist. Da die Herstellung von Bauteilen aus Faserverbundkunststoffen meist sehr zeit- und kostenaufwändig ist, ist erfindungsgemäß optional vorgesehen, dass die Batterieblockabdeckung aus einem sich von dem Material des Rumpfes des Fluggeräts unterscheidenden Material hergestellt ist. Beispielsweise kann die Batterieblockabdeckung als Blech aus einem metallischen Material oder aus einem spritzgießbaren Kunststoff hergestellt sein. Um die Form der Batterieblockabdeckung an die Formgebung des Fluggeräts besonders vorteilhaft angleichen zu können, ist erfindungsgemäß vorgesehen, dass die Batterieblockabdeckung mittels additiver Fertigungsverfahren, beispielsweise mittels 3D-Druck, hergestellt werden.

Dazu kann der Batterieblock schwerkraftbedingt durch ein Herablassen des Batterieblocks besonders einfach in das Batteriefach eingeführt werden. Dadurch, dass der Batterieblock von oben in das Batteriefach eingeführt wird, kann das Fluggerät während der Installation des Batterieblocks auf dem Untergrund stehen bleiben, sodass eine Drehung des Fluggeräts auf den Kopf nicht notwendig ist. Somit ist eine besonders einfache und schnelle Installation des Batterieblocks in das Batteriefach möglich.

Erfindungsgemäß ist das Batteriefach so innerhalb des Rumpfes angeordnet, dass die Gesamtschwerpunkte des Fluggeräts vor und nach der Installation des Batterieblocks in das Fluggerät unverändert sind. Somit ist jederzeit ein gegenüber Umkippen gesicherter Stand des Fluggeräts möglich. Bei einem manuell durchgeführten Wechsel des Batterieblocks ist eine Sicherung des Fluggeräts gegenüber Umkippen durch ein Festhalten oder Festlegen des Fluggeräts nicht notwendig. Somit ist ein schneller Wechsel des Batterieblocks möglich, sodass der Flugbetrieb besonders schnell wiederaufgenommen werden kann.

Erfindungsgemäß ist das Batteriefach so ausgestaltet, dass der von oben durch die Aufnahmeöffnung hindurch in das Batteriefach eingeführte Batterieblock formschlüssig innerhalb des Batteriefachs festlegbar ist. Vorteilhafterweise ist das Batteriefach taschenförmig ausgestaltet, sodass der in das taschenförmige Batteriefach eingeführte Batterieblock schwerkraftbedingt in einer untersten Position innerhalb des Batteriefachs verbleibt. Somit ist der Batterieblock bei bestimmungsgemäßer Verwendung des Fluggeräts sicher innerhalb des Batteriefachs aufgenommen.

Durch die Griffvorrichtung ist der Batterieblock besonders komfortabel und schnell in das Batteriefach hineinführbar und herausziehbar. Die Griffvorrichtung kann vorteilhafterweise als ein henkelförmiger Griff ausgestaltet sein, der einen Greifbereich aufweist, in dem die Griffvorrichtung beziehungsweise der Batterieblock gegriffen werden kann. Um einen besonders geringen Strömungswiderstand während des Flugbetriebs zu erreichen, ist erfindungsgemäß vorgesehen, dass die Griffvorrichtung als eine in die Batterieblockabdeckung eingebrachte Ausnehmung mit einer Hinterschneidung ausgestaltet ist, sodass keine aus dem Rumpf des Fluggeräts herausstehende Griffvorrichtung den Strömungswiderstand beeinflusst. Die als Ausnehmung ausgestaltete Griffvorrichtung ist vorteilhafterweise so ausgestaltet, dass in diese mit Fingern, mit der Hand oder mit einer Greifvorrichtung hineingereicht und durch die Hinterschneidung der Batterieblock gegriffen werden kann. Insbesondere bei schweren Batterieblöcken ist für einen Tragekomfort des Batterieblocks ein henkelförmiger Griff zu bevorzugen.

In einer vorteilhaften Umsetzung des Erfindungsgedankens ist vorgesehen, dass der Batterieblock quaderförmig ausgestaltet ist. Dabei ist der Batterieblock vorteilhafterweise zudem länglich ausgestaltet, sodass eine Richtung zur Einführung des Batterieblocks in das Batteriefach besonders einfach erkennbar ist. Erfindungsgemäß ist optional vorgesehen, dass der Batterieblock einen kreisrunden Querschnitt aufweist und länglich ausgestaltet ist. Somit ist die Richtung zur Einführung des Batterieblocks in das Batteriefach bekannt, wobei das Einführen in allen um eine Längsachse des Batterieblocks verdrehten Ausrichtungen des Batterieblocks möglich ist.

Vorteilhafterweise weist eine dem Fluggerät zugewandten Stirnseite des Batterieblocks eine zu der Aufnahmeöffnung korrespondierende Querschnittsfläche auf. Damit kann der Batterieblock auf der dem Fluggerät zugewandten Stirnseite besonders einfach durch die Aufnahmeöffnung gesteckt werden. Bei einer Verlagerung des Batterieblocks entlang der Einschubachse in Richtung des Batteriefachs wird durch ein Anliegen von Außenseiten des Batterieblocks an der Aufnahmeöffnung eine Führung des Batterieblocks bewirkt. Damit ist ein besonders einfaches und schnelles Einführen des Batterieblocks in das Batteriefach möglich.

In einer vorteilhaften Ausgestaltung der Erfindung ist vorgesehen, dass das Fluggerät mindestens zwei in einer Längsrichtung des Fluggeräts und in Flugrichtung hintereinander angeordnete Batterieblöcke aufweist. Durch eine Verwendung von mehreren Batterieblöcken zum Betrieb des Fluggeräts kann eine hohe Gesamtbatteriekapazität erreicht werden, sodass ein besonders langer Flugbetrieb möglich ist. Erfindungsgemäß ist vorgesehen, dass anstelle eines einzigen Batterieblocks mit großer Kapazität, welcher typischerweise eine große Abmessung und ein großes Gewicht aufweist, zwei oder mehrere Batterieblöcke mit kleinerer Kapazität verwendet werden. Dadurch ist der durch die Gewichtskraft der Batterieblöcke erzeugte Verlagerung des Gesamtschwerpunkts durch eine entsprechende Anordnung der Batterieblöcke innerhalb des Rumpfes besonders gut einstellbar. Durch die in der Längsrichtung des Fluggeräts und in Flugrichtung hintereinander angeordneten Batterieblöcke ist bei einem Flugbetrieb des Fluggeräts mit nur einem Batterieblock eine zu einer Seite des Fluggeräts verändernde Schwerpunktverlagerung vermeidbar. Somit ist durch die erfindungsgemäße Anordnung der mehreren Batterieblöcke ein besonders stabiler Flugbetrieb möglich. Außerdem wird eine seitliche Verlagerung des Gesamtschwerpunkts des Fluggeräts während der Installation der Batterieblöcke vermieden. Dadurch, dass die zwei beziehungsweisen die mehreren Batterieblöcke erfindungsgemäß von der Oberseite des Fluggeräts zugänglich sind, ist ein besonders einfacher und schneller Wechsel der Batterieblöcke möglich.

In einer vorteilhaften Umsetzung des Erfindungsgedankens ist vorgesehen, dass das Fluggerät mindestens eine elektrische Kontakteinrichtung mit zwei elektrischen Kontaktelementen zum Herstellen einer elektrischen Verbindung zwischen dem Batterieblock und dem Fluggerät zur Energieversorgung des Fluggeräts und/oder zur Datenübertragung aufweist, wobei ein erstes elektrisches Kontaktelement so an einer Außenseite des Batterieblocks angeordnet ist und ein zweites elektrisches Kontaktelement so auf einer Innenseite des Batteriefachs angeordnet ist, dass die elektrische Verbindung bei einem bestimmungsgemäß in das Batteriefach eingeführten Batterieblock hergestellt ist. Vorteilhafterweise ist das erste elektrische Kontaktelement an einer bei dem Einschieben des Batterieblocks in das Batteriefach zugewandten Stirnseite des Batterieblocks angeordnet, sodass eine elektrische Verbindung erst bei einem vollständig in das Batteriefach eingeführten Batterieblocks hergestellt ist. Erfindungsgemäß ist vorgesehen, dass das Vorhandensein der elektrischen Verbindung zwischen dem Batterieblock und dem Fluggerät durch eine Steuereinheit des Fluggeräts überwacht wird. Zudem kann mittels der Kontakteinrichtung eine Datenübertragung von Zustandsinformationen des Batterieblocks, wie beispielsweise der aktuellen Kapazität, dem aktuellen Ladezustand oder den aktuellen Betriebsbedingungen, wie die aktuelle Leistungsabfrage oder der Temperatur, erfolgen. Durch die Überwachung der korrekten Installation sämtlicher Batterieblöcke ist ein sicherer Flugbetrieb möglich.

Bei einer vorteilhaften Ausgestaltung des erfindungsgemäßen Fluggeräts ist vorgesehen, dass die Griffvorrichtung an einer dem Batterieblock abgewandten Seite der Batterieblockabdeckung an der Batterieblockabdeckung angelenkt ist. Somit kann die Griffvorrichtung für ein Herausziehen oder ein Tragen des Batterieblocks hochbeziehungsweise herausgeklappt werden, sodass die Griffvorrichtung in dem Greifbereich besonders gut gegriffen werden kann.

Um einen bei durch die Griffvorrichtung möglicherweise erzeugten Strömungswiderstand während des Flugbetriebs besonders gering zu halten, ist in einer vorteilhaften Ausgestaltung des Erfindungsgedankens vorgesehen, dass die Batterieblockabdeckung und/oder die Rumpfoberfläche eine zu der Greifvorrichtung korrespondierende Ausnehmung aufweist, sodass die Greifvorrichtung in einem unbetätigten Zustand innerhalb der Ausnehmung anordnenbar ist. Dabei wird das durch die Ausnehmung gebildete Volumen bei einem Einklappen der Griffvorrichtung vollständig durch die Griffvorrichtung ausgefüllt. Vorteilhafterweise schließt eine in einem eingeklappten Zustand der Griffvorrichtung nach außen weisende Oberfläche der Griffvorrichtung bündig mit der Rumpfoberfläche ab. Somit sind während des Flugbetriebs des Fluggeräts Verwirbelungen oder Strömungsabrisse an Kanten vermeidbar. Somit ist im Flugbetrieb ein geringer Strömungswiderstand des Fluggeräts möglich, sodass eine besonders lange Einsatzdauer des Fluggeräts möglich ist.

Um den Batterieblock besonders sicher innerhalb des Batteriefachs anzuordnen, ist in einer vorteilhaften Umsetzung des Erfindungsgedankens vorgesehen, dass der Batterieblock eine Verriegelungseinrichtung aufweist, mit der der Batterieblock bei einem bestimmungsgemäß in das Batteriefach eingeführten Batterieblock formschlüssig innerhalb des Batteriefachs festlegbar ist. Die Verriegelungseinrichtung kann beispielsweise als ein seitlich aus dem Batterieblock hervorspringender Schnapphaken ausgestaltet sein, der bei einem in das Batteriefach eingeschobenen Batterieblock in eine an einer Innenseite des Batteriefachs angeordnete und zu dem Schnapphaken korrespondierende Ausnehmung eingreift. Dabei ist die Verriegelungseinrichtung erfindungsgemäß so ausgestaltet, dass der Schnapphaken mittels einer Federkraft innerhalb der Ausnehmung gehalten wird und für ein Lösen der formschlüssigen Verbindung entgegen der Federkraftrichtung zurückschiebbar ist, sodass die formschlüssige Verbindung aufgehoben werden kann, um den Batterieblock wieder aus dem Batteriefach entfernen zu können.

In einer vorteilhaften Ausgestaltung der Erfindung ist vorgesehen, dass die Verriegelungseinrichtung so mit der Griffvorrichtung in Wirkverbindung steht, dass die Verriegelungseinrichtung durch eine Schwenkbewegung der Griffvorrichtung betätigbar ist. Somit ist eine Verriegelung beziehungsweise eine Entriegelung des Batterieblocks und das Herausziehen des Batterieblocks aus dem Batteriefach durch eine manuelle Betätigung der Verriegelungseinrichtung mit nur einer Hand möglich. Dadurch kann ein Verriegelungsvorgang besonders einfach und schnell ausgeführt werden. Erfindungsgemäß ist vorgesehen, dass die Griffvorrichtung an der Batterieblockabdeckung angelenkt ist und auf der nach außen weisenden Seite der Griffvorrichtung den henkelförmigen Griff aufweist und auf einer gegenüberliegenden Seite der Greiffeinrichtung die Verriegelungseinrichtung aufweist. Dabei kann die Verriegelungseinrichtung hakenförmig ausgestaltet sein, der in einem betätigten Zustand, also bei einem eingeklappten Zustand der Griffvorrichtung, in eine korrespondierende und an dem Fluggerät angeordnete Ausnehmung eingreift, sodass eine formschlüssige Verriegelung des Batterieblocks innerhalb des Batteriefachs erfolgt.

Vorteilhafterweise ist die Griffvorrichtung so an der Batterieblockabdeckung angelenkt, dass ein Abstand zwischen einem Anlenkpunkt und der Verriegelungseinrichtung kleiner ist als ein Abstand zwischen dem Anlenkpunkt und dem Greifbereich. Somit kann die Griffvorrichtung durch einen entsprechend großen Hebel besonders leicht betätigt werden.

Weitere vorteilhafte Ausgestaltungen des Erfindungsgedankens werden anhand von in den Zeichnungen dargestellten Ausführungsbeispielen erläutert. Es zeigen:
Figur 1 eine schematische Darstellung des erfindungsgemäßen Fluggeräts mit einem in das Batteriefach eingeführten Batterieblock und
Figur 2 eine schematische Darstellung der Batterieblockabdeckung.

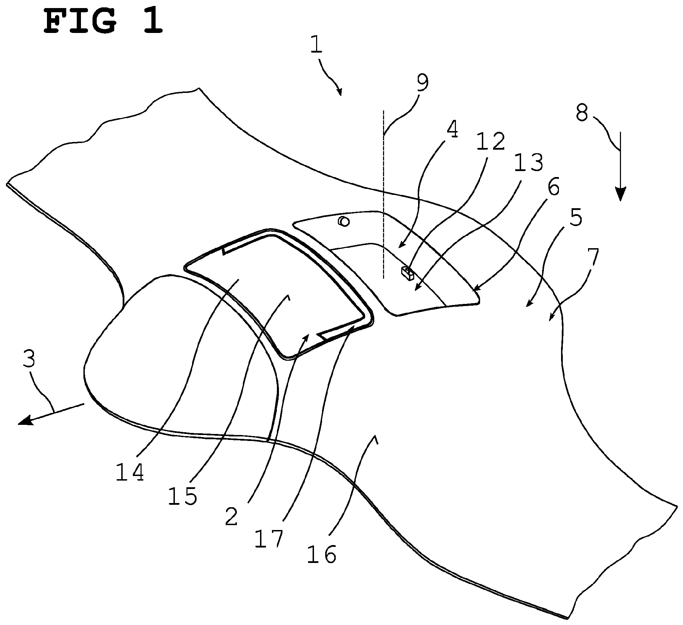

In Figur 1 ist eine schematische Darstellung des erfindungsgemäßen Fluggeräts 1 zur Aufnahme von zwei Batterieblöcken 2 zur Energieversorgung des Fluggeräts 1 gezeigt. In das in Figur 1 gezeigte erfindungsgemäße Fluggerät 1 sind zwei Batterieblöcke 2 in einer Längsrichtung des Fluggeräts 1 und in Flugrichtung 3 hintereinander anordnenbar, wobei ein erster Batterieblock 2 in ein in Flugrichtung 3 vorderes Batteriefach 4 des Fluggeräts 1 eingesetzt ist und ein in Flugrichtung 3 hinteres Batteriefach 4 kein Batterieblock 2 aufweist. Das Batteriefach 4 ist innerhalb eines durch einen Rumpf 5 des Fluggeräts 1 gebildeten Volumens angeordnet und von außen durch eine Aufnahmeöffnung 6 des Rumpfes 5 zugänglich. Der Batterieblock 2 ist durch die Aufnahmeöffnung 6 hindurch in das Batteriefach 4 einbringbar. Dabei ist die Aufnahmeöffnung 6 bei bestimmungsgemäßer Verwendung des Fluggeräts 1 auf einer nach oben weisenden Oberseite 7 des Rumpfes 5 angeordnet ist, sodass der Batterieblock 2 durch eine Verlagerung des Batterieblocks 2 entlang einer im Wesentlichen parallel zu einer Schwerkraftrichtung 8 orientierten Einschubachse 9 in das Batteriefach 4 einführbar ist. Das Batteriefach 4 ist taschenförmig, sodass der in das taschenförmige Batteriefach 4 eingeführte Batterieblock 2 schwerkraftbedingt in einer untersten Position innerhalb des Batteriefachs 4 verbleibt. Das Fluggerät 1 weist eine elektrische Kontakteinrichtung zum Herstellen einer elektrischen Verbindung zwischen dem Batterieblock 2 und dem Fluggerät 1 zur Energieversorgung des Fluggeräts 1 auf. Ein in Figur 1 nicht dargestelltes erstes elektrisches Kontaktelement 10 ist an einer dem Batteriefach 4 zugewandten Stirnseite 11 des Batterieblocks 2 angeordnet und ein zweites elektrisches Kontaktelement 12 an einer Innenseite 13 des Batteriefachs 4 angeordnet, sodass eine elektrische Verbindung erst dann hergestellt ist, sobald der Batterieblock 2 vollständig in das Batteriefach 4 eingeschoben ist. In der erfindungsgemäßen Ausgestaltung des Batterieblocks 2 weist der Batterieblock 2 eine Batterieblockabdeckung 14 auf. Eine Außenkontur 15 der Batterieblockabdeckung 14 ist an eine Rumpfform einer die Aufnahmeöffnung 6 umgebenden Rumpfoberfläche 16 des Fluggeräts 1 angepasst. In einem montierten Zustand des Batterieblocks 2 schließt mit der Rumpfoberfläche 16 bündig ab. Der Batterieblock 2 weist eine Griffvorrichtung 17 auf, die bei einem bestimmungsgemäß in das Batteriefach 4 eingeführten Batterieblock 2 von außerhalb des Fluggeräts 1 erreichbar ist. Die Griffvorrichtung 17 ist in einem unbetätigten Zustand durch eine in die Batterieblockabdeckung 14 eingebrachte Ausnehmung aufnehmbar, sodass während des Flugbetriebs ein durch die Rumpfoberfläche erzeugter Strömungswiderstand besonders gering ist.

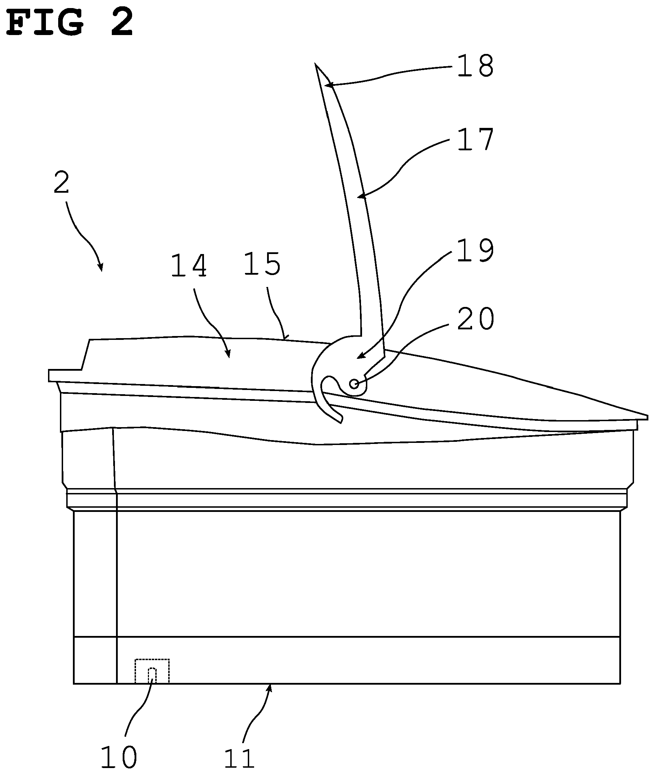

In Figur 2 ist eine schematische Darstellung der Batterieblockabdeckung 14 gezeigt, die an einer Stirnseite 11 des quaderförmigen Batterieblock 2 angeordnet ist. Die Außenkontur 15 der Batterieblockabdeckung 14 ist an die Rumpfform der die Aufnahmeöffnung 6 umgebenden Rumpfoberfläche 16 des Fluggeräts 1 angepasst und schließt in einem montierten Zustand des Batterieblocks 2 mit der Rumpfoberfläche 16 des Rumpfes 5 bündig ab. Die Batterieblockabdeckung 14 ist als dünnwandig ausgestaltetes und an die Rumpfform angepasstes Bauteil ausgestaltet. Die Griffvorrichtung 17 der Batterieblockabdeckung 14 ist als ein henkelförmiger Griff ausgestaltet, der einen Greifbereich 18 aufweist, in dem die Griffvorrichtung 17 beziehungsweise der Batterieblock 2 gegriffen werden kann. Die Griffvorrichtung 17 ist in Figur 2 in einem ausgeklappten Zustand gezeigt. Der Batterieblock 2 weist eine Verriegelungseinrichtung 19 auf, mit der der Batterieblock 2 formschlüssig innerhalb des Batteriefachs 4 festlegbar ist, wenn der Batterieblock 2 bestimmungsgemäß in das Batteriefach 4 eingeführt ist. Die Verriegelungseinrichtung 19 steht so mit der Griffvorrichtung 17 in Wirkverbindung, dass die Verriegelungseinrichtung 19 durch eine Schwenkbewegung der Griffvorrichtung 17 betätigbar ist. Somit ist eine Verriegelung beziehungsweise eine Entriegelung des Batterieblocks 2 und das Herausziehen des Batterieblocks 2 aus dem Batteriefach 4 durch eine manuelle Betätigung der Verriegelungseinrichtung 19 mit nur einer Hand möglich. Die Griffvorrichtung 17 ist an der Batterieblockabdeckung 14 angelenkt und weist auf der nach außen weisenden Seite der Griffvorrichtung 17 den henkelförmigen Griff mit dem Greifbereich 18 auf. Auf einer zu dem Greifbereich 18 gegenüberliegenden Seite der Griffvorrichtung 17 ist die Verriegelungseinrichtung 19 angeordnet. Dabei ist die Griffvorrichtung 17 so an der Batterieblockabdeckung 14 angelenkt, dass ein Abstand zwischen einem Anlenkpunkt 20 und der Verriegelungseinrichtung 19 kleiner ist als ein Abstand zwischen dem Anlenkpunkt 20 und dem Greifbereich 18. Das erste elektrische Kontaktelement 10 ist auf der dem Batteriefach 4 zugewandten Stirnseite 11 des Batterieblocks 2 angeordnet, sodass die elektrische Verbindung zwischen dem Batterieblock 2 und dem Fluggerät 1 erst dann hergestellt ist, sobald der Batterieblock 2 vollständig in das Batteriefach 4 eingeschoben ist.

## Patentansprüche

1. Fluggerät (1) mit einem Batterieblock (2) zur Energieversorgung des Fluggeräts (1), wobei der Batterieblock (2) innerhalb eines Batteriefachs (4) des Fluggeräts (1) anordnenbar ist, wobei das Batteriefach (4) innerhalb eines durch einen Rumpf (5) des Fluggeräts (1) gebildeten Volumens angeordnet ist und von außen durch eine Aufnahmeöffnung (6) des Rumpfes (5) zugänglich ist, sodass der Batterieblock (2) durch die Aufnahmeöffnung (6) hindurch in das Batteriefach (4) einbringbar ist, wobei die Aufnahmeöffnung (6) bei bestimmungsgemäßer Verwendung des Fluggeräts (1) auf einer nach oben weisenden Oberseite (7) des Rumpfes (5) angeordnet ist, sodass der Batterieblock (2) durch eine Verlagerung des Batterieblocks (2) entlang einer im Wesentlichen parallel zu einer Schwerkraftrichtung (8) orientierten Einschubachse (9) in das Batteriefach (4) einführbar ist, wobei der Batterieblock (2) eine Griffvorrichtung (17) aufweist, die bei einem bestimmungsgemäß in das Batteriefach (4) eingeführten Batterieblock (2) von außerhalb des Fluggeräts (1) erreichbar ist, **dadurch gekennzeichnet, dass** der Batterieblock (2) eine Batterieblockabdeckung (14) aufweist, wobei eine Außenkontur (15) der Batterieblockabdeckung (14) an eine Rumpfform einer die Aufnahmeöffnung (6) umgebenden Rumpfoberfläche (16) des Fluggeräts (1) angepasst ist und in einem montierten Zustand des Batterieblocks (2) mit der Rumpfoberfläche (16) des Rumpfes (5) bündig abschließt, wobei die Batterieblockabdeckung (14) im Bereich der Außenkontur (15) ein Dichtmittel aufweist, wobei das Dichtmittel in dem montierten Zustand des Batterieblocks (2) im Bereich der Rumpfoberfläche (16) an dem Rumpf (5) anliegt und das Batteriefach (4) flüssigkeitsdicht verschließt.

2. Fluggerät (1) gemäß Anspruch 1, **dadurch gekennzeichnet, dass** der Batterieblock (2) quaderförmig ausgestaltet ist.

3. Fluggerät (1) gemäß Anspruch 1 oder 2, **dadurch gekennzeichnet, dass** das Fluggerät (1) mindestens zwei in einer Längsrichtung des Fluggeräts (1) und in Flugrichtung (3) hintereinander angeordnete Batterieblöcke (2) aufweist.

4. Fluggerät (1) gemäß einem der voranstehenden Ansprüche, **dadurch gekennzeichnet, dass** das Fluggerät (1) mindestens eine elektrische Kontakteinrichtung mit zwei elektrischen Kontaktelementen (10, 12) zum Herstellen einer elektrischen Verbindung zwischen dem Batterieblock (2) und dem Fluggerät (1) zur Energieversorgung des Fluggeräts (1) und/oder zur Datenübertragung aufweist, wobei ein erstes elektrisches Kontaktelement (10) so an einer Außenseite des Batterieblocks (2) angeordnet ist und ein zweites elektrisches Kontaktelement (12) so auf einer Innenseite (13) des Batteriefachs (4) angeordnet ist, dass die elektrische Verbindung bei einem bestimmungsgemäß in das Batteriefach (4) eingeführten Batterieblock (2) hergestellt ist.

5. Fluggerät (1) gemäß einem der voranstehenden Ansprüche, **dadurch gekennzeichnet, dass** die Griffvorrichtung (17) an einer dem Batterieblock (2) abgewandten Seite der Batterieblockabdeckung (14) an der Batterieblockabdeckung (14) angelenkt ist.

6. Fluggerät (1) gemäß einem der voranstehenden Ansprüche, **dadurch gekennzeichnet, dass** die Batterieblockabdeckung (14) und/oder die Rumpfoberfläche (16) eine zu der Griffvorrichtung (17) korrespondierende Ausnehmung aufweist, sodass die Griffvorrichtung (17) in einem unbetätigten Zustand innerhalb der Ausnehmung anordnenbar ist.

7. Fluggerät (1) gemäß einem der voranstehenden Ansprüche, **dadurch gekennzeichnet, dass** der Batterieblock (2) eine Verriegelungseinrichtung (19) aufweist, mit der der Batterieblock (2) bei einem bestimmungsgemäß in das Batteriefach (4) eingeführten Batterieblock (2) formschlüssig innerhalb des Batteriefachs (4) festlegbar ist.

8. Fluggerät (1) gemäß Anspruch 7, **dadurch gekennzeichnet, dass** die Verriegelungseinrichtung (19) so mit der Griffvorrichtung (17) in Wirkverbindung steht, dass die Verriegelungseinrichtung (19) durch eine Schwenkbewegung der Griffvorrichtung (17) betätigbar ist.

## Claims

1. Aerial vehicle (1) comprising a battery block (2) for supplying the aerial vehicle (1) with power, wherein the battery block (2) can be arranged within a battery compartment (4) of the aerial vehicle (1), wherein the battery compartment (4) is arranged within a volume formed by a fuselage (5) of the aerial vehicle (1) and is accessible from outside through a receiving opening (6) in the fuselage (5), such that the battery block (2) can be introduced into the battery compartment (4) through the receiving opening (6), wherein, when the aerial vehicle (1) is used as intended, the receiving opening (6) is arranged on an upwardly facing top side (7) of the fuselage (5), such that the battery block (2) can be inserted into the battery compartment (4) by the battery block (2) being moved along an introduction axis (9) oriented substantially in parallel with a direction of gravitational force (8), wherein the battery block (2) comprises a handle device (17), which, when the battery block (2) has been inserted into the battery compartment (4) as intended, can be reached from outside the aerial vehicle (1), **characterised in that** the battery block (2) comprises a battery block cover (14), wherein an outer contour (15) of the battery block cover (14) is adapted to a fuselage shape of a fuselage surface (16) of the aerial vehicle (1) surrounding the receiving opening (6) and is flush with the fuselage surface (16) of the fuselage (5) in an assembled state of the battery block (2), wherein the battery block cover (14) comprises a sealing means in the region of the outer contour (15), wherein, in the assembled state of the battery block (2), the sealing means abuts the fuselage (5) in the region of the fuselage surface (16) and closes the battery compartment (4) in a liquid-tight manner.

2. Aerial vehicle (1) according to claim 1, **characterised in that** the battery block (2) is cuboid in shape.

3. Aerial vehicle (1) according to claim 1 or 2, **characterised in that** the aerial vehicle (1) comprises at least two battery blocks (2), which are arranged one behind another in a longitudinal direction of the aerial vehicle (1) and in the direction of flight (3).

4. Aerial vehicle (1) according to any of the preceding claims, **characterised in that** the aerial vehicle (1) comprises at least one electrical contact apparatus comprising two electrical contact elements (10, 12) for establishing an electrical connection between the battery block (2) and the aerial vehicle (1) for supplying the aerial vehicle (1) with power and/or for data transfer, wherein a first electrical contact element (10) is arranged on an outer side of the battery block (2) and a second electrical contact element (12) is arranged on an inner side (13) of the battery compartment (4) such that the electrical connection is established when the battery block (2) is inserted into the battery compartment (4) as intended.

5. Aerial vehicle (1) according to any of the preceding claims, **characterised in that** the handle device (17) is hinged to the battery block cover (14) on a side of the battery block cover (14) facing away from the battery block (2).

6. Aerial vehicle (1) according to any of the preceding claims, **characterised in that** the battery block cover (14) and/or the fuselage surface (16) comprise a recess corresponding to the handle device (17), such that the handle device (17) can be arranged within the recess in an unactuated state.

7. Aerial vehicle (1) according to any of the preceding claims, **characterised in that** the battery block (2) comprises a locking apparatus (19), by means of which the battery block (2) can be fixed within the battery compartment (4) in a form-fitting manner when the battery block (2) is inserted into the battery compartment (4) as intended.

8. Aerial vehicle (1) according to claim 7, **characterised in that** the locking apparatus (19) is operatively connected to the handle device (17) such that the locking apparatus (19) can be actuated by a pivoting movement of the handle device (17).

## Revendications

1. Aéronef (1) avec un bloc de batterie (2) pour l'alimentation en énergie de l'aéronef (1), le bloc de batterie (2) pouvant être agencé à l'intérieur d'un compartiment de batterie (4) de l'aéronef (1), le compartiment de batterie (4) étant agencé à l'intérieur d'un volume formé par un fuselage (5) de l'aéronef (1) et étant accessible de l'extérieur par une ouverture de réception (6) du fuselage (5), de telle sorte que le bloc de batterie (2) peut être introduit dans le compartiment de batterie (4) à travers l'ouverture de réception (6), l'ouverture de réception (6) étant agencée, en cas d'utilisation conforme de l'aéronef (1), sur un côté supérieur (7) du fuselage (5) orienté vers le haut, de telle sorte que le bloc de batterie (2) peut être introduit dans le compartiment de batterie (4) par un déplacement du bloc de batterie (2) le long d'un axe d'insertion (9) orienté essentiellement parallèlement à une direction de la gravité (8), le bloc de batterie (2) présentant un dispositif de préhension (17) qui peut être atteint de l'extérieur de l'aéronef (1) lorsque le bloc de batterie (2) est introduit de manière conforme dans le compartiment de batterie (4), **caractérisé en ce que** le bloc de batterie (2) présente un couvercle de bloc de batterie (14), un contour extérieur (15) du couvercle de bloc de batterie (14) étant adapté à une forme de fuselage d'une surface de fuselage (16) de l'aéronef (1) entourant l'ouverture de réception (6) et se terminant à fleur de la surface de fuselage (16) du fuselage (5) dans un état monté du bloc de batterie (2), le couvercle de bloc de batterie (14) présentant un moyen d'étanchéité dans la zone du contour extérieur (15), le moyen d'étanchéité s'appliquant contre le fuselage (5) dans la zone de la surface de fuselage (16) dans l'état monté du bloc de batterie (2) et fermant le compartiment de batterie (4) de manière étanche aux liquides.

2. Aéronef (1) selon la revendication 1, **caractérisé en ce que** le bloc de batterie (2) est conçu sous forme parallélépipédique.

3. Aéronef (1) selon la revendication 1 ou 2, **caractérisé en ce que** l'aéronef (1) présente au moins deux blocs de batterie (2) agencés l'un derrière l'autre dans une direction longitudinale de l'aéronef (1) et dans la direction de vol (3).

4. Aéronef (1) selon l'une quelconque des revendications précédentes, **caractérisé en ce que** l'aéronef (1) présente au moins un appareil de contact électrique avec deux éléments de contact électrique (10, 12) pour établir une liaison électrique entre le bloc de batterie (2) et l'aéronef (1) pour l'alimentation en énergie de l'aéronef (1) et/ou pour la transmission de données, un premier élément de contact électrique (10) étant agencé sur un côté extérieur du bloc de batterie (2) et un deuxième élément de contact électrique (12) étant agencé sur un côté intérieur (13) du compartiment de batterie (4) de telle sorte que la liaison électrique soit établie lorsque le bloc de batterie (2) est introduit de manière conforme dans le compartiment de batterie (4).

5. Aéronef (1) selon l'une quelconque des revendications précédentes, **caractérisé en ce que** le dispositif de préhension (17) est articulé sur le couvercle de bloc de batterie (14) sur un côté du couvercle de bloc de batterie (14) détourné du bloc de batterie (2).

6. Aéronef (1) selon l'une quelconque des revendications précédentes, **caractérisé en ce que** le couvercle de bloc de batterie (14) et/ou la surface de fuselage (16) présentent un évidement correspondant au dispositif de préhension (17), de telle sorte que le dispositif de préhension (17) peut être agencé à l'intérieur de l'évidement dans un état non actionné.

7. Aéronef (1) selon l'une quelconque des revendications précédentes, **caractérisé en ce que** le bloc de batterie (2) présente un appareil de verrouillage (19) avec lequel le bloc de batterie (2) peut être fixé par complémentarité de forme à l'intérieur du compartiment de batterie (4) lorsque le bloc de batterie (2) est introduit de manière conforme dans le compartiment de batterie (4).

8. Aéronef (1) selon la revendication 7, **caractérisé en ce que** l'appareil de verrouillage (19) est en liaison active avec le dispositif de préhension (17) de telle sorte que l'appareil de verrouillage (19) peut être actionné par un mouvement de pivotement du dispositif de préhension (17).
